# FASCICULE DE BREVET EUROPEEN

(11) **EP 0 538 139 B1**
(45) Date de publication et mention de la délivrance du brevet: **11.09.1996**
(21) Numéro de dépôt: 92402836.8
(22) Date de dépôt: 16.10.1992
(51) Int. Cl.: C08J 5/18

(54) **Film thermoscellable et pelable pour récipients en polystyrène et procédé de scellage au moyen dudit film**
Heisssiegelbare und abziehbare Folie für Behälter aus Polystyrol und Verfahren zum Siegeln mittels dieser Folie
Heat sealable and peelable film for polystyrene containers and method of sealing by means of said film

(30) Priorité: 18.10.1991 FR 9112899
(43) Date de publication de la demande: 21.04.1993
(73) Titulaire: ELF ATOCHEM S.A., F-92800 Puteaux (FR)
(72) Inventeur: Arsac, Jean-François, F-64000 Pau (FR); Bonabal, Catherine, F-64140 Billere (FR); Laurent, Betty, F-27300 Bernay (FR)
(74) Mandataire: Ahner, Francis

(56) Documents cités:
- PATENT ABSTRACTS OF JAPAN vol. 11, no. 185 (C-428)(2632) 13 Juin 1987 & JP-A-62 011 761
- PATENT ABSTRACTS OF JAPAN vol. 11, no. 185 (C-428)(2632) 13 Juin 1987 & JP-A-62 011 747

## Description

La présente invention a pour objet un film thermoscellable et pelable pour récipients en polystyrène.

Elle a également pour objet un procédé pour sceller un récipient en polystyrène au moyen dudit film et le récipient en polystyrène thermoscellé. Elle a enfin pour objet l'utilisation d'une composition pour la réalisation d'un film thermoscellable et pelable pour récipients en polystyrène.

Les films thermoscellables et pelables sont utilisés à grande échelle pour fermer de manière temporaire des récipients contenant par exemple des produits alimentaires. Lors de l'utilisation, le consommateur arrache ledit film. Ainsi, ces films thermoscellés doivent présenter plusieurs caractéristiques que l'on va décrire succintement ci-après.

Le film doit permettre une obturation étanche du récipient. On rappelle que le scellage se caractérise par l'apport conjoint d'un échauffement et d'une pression, permettant de faire fondre la couche scellable et de "l'écraser" sur le bord du récipient pour former la bande de soudure. Un bon scellage nécessite aussi, en plus d'un certain ramollissement ou écrasement de la couche supérieure, un ramollissement ou déformation du récipient. De façon connue, le scellage s'opère à l'aide de mors chauffants (sur un plage habituelle de 100°C à 220°C), sous une pression appropriée généralement de 0,1 à 1 MPa, pendant des temps courts de l'ordre de la seconde.

Un tel film doit également répondre aux critères de pelabilité qui se caractérisent par une force de pelage, nécessaire à l'ouverture de l'opercule ou couvercle. Cette force de pelage est en fait représentative de la juste adhésion entre la couche scellable et le support. Habituellement, une force comprise entre 200 g/cm et 600 g/cm est synonyme d'un bon compromis fermeture-ouverture.

Par ailleurs, aujourd'hui, l'industrie réclame des emballages dont tous les constituants (films, décors, opercules) soient recyclables avec le matériau principal. Cela requiert, de plus en plus, le remplacement de matériaux divers tels que le papier, l'aluminium, laminés ou coextrudés avec des adhésifs de type "hot-melt" ou contenant des solvants.

De nombreux films thermoscellables ont déjà été proposés afin de satisfaire aux critères indiqués ci-dessus.

Ainsi, le document EP-A-406 681 décrit un film thermoscellable multicouche constitué d'une couche de copolymère styrène/butadiène/styrène et d'une autre couche à base notamment de polyamide. Ce film pouvant comprendre en outre une couche intermédiaire constituée par exemple de polystyrène choc (c'est-à-dire d'un polystyrène renforcé par une faible quantité de polybutadiène) l'adhésion entre les différentes couches pouvant être améliorée par un promoteur d'adhésion à base d'un copolymère éthylène, acétate de vinyle, anhydride maléique.

Le document JP-A-62-00939 (CA106) (26) : 215186h) décrit un film thermoscellable pour récipients en polystyrène contenant un mélange de 15 % de copolymère éthylène acrylate, et 70 % d'un copolymère séquencé styrène/butadiène/styrène (SBS) et (15 %) d'un polystyrène. L'inconvénient de la présence de SBS en grande quantité est dû à ce que le film perd de son élasticité du fait de la dégradation du SBS au cours du temps (étirabilité insuffisante), ce qui entraîne également un accroissement de son hétérogénéité. Par ailleurs, ce document est destiné aux applications des films refermables après ouverture (repelabilité). Le document JP-A-62011747, Patent Abstracts of Japan vol.11, no.185, 13 juin 1987, décrit des compositions de film contenant au moins 10% en poids de SBS (cf. exemple 5, tableau).

Le document JP-A-62-11761 (CA106) (24): 197630s décrit un film thermoscellable pour récipients en polystyrène comprenant un mélange de copolymère d'éthylène et d'acrylate et un copolymère séquencé styrène/ butadiène/styrène.

On doit également noter dans un domaine différent le document EP-A-412 503 qui décrit une composition adhésive contenant un mélange de copolymère éthylène acétate de vinyle, de polystyrène, de polyacrylate, d'un copolymère styrène/butadiène/styrène et d'un copolymère éthylène-alphaoléfine. Ces compositions ne sont pas destinées à la réalisation de film thermoscellable.

En rapport avec l'art antérieur qui vient d'être décrit, un des objets de la présente invention est de proposer un film thermoscellable permettant d'obtenir une large plage de scellabilité à des températures inférieures à celles nécessaires avec les autres types de film.

Un autre but de la présente invention est de proposer un film thermoscellable dont le scellage est plus homogène, les forces d'ouverture étant de ce fait plus régulières et par conséquent, mieux contrôlées.

Un autre objet de la présente invention est de proposer un film thermoscellable dont le pelage subséquent s'effectue dans les conditions requises.

Un autre objet de la présente invention est de proposer un film thermoscellable dont le recyclage est rendu possible de même que celui du matériau principal.

D'autres objets et avantages de la présente invention apparaîtront à la lumière de la description ci-après.

Le film thermoscellable et pelable pour récipients en polystyrène est constitué d'au moins un pellicule comprenant un mélange (a) de polystyrène, (b) d'un ou de copolymère(s) d'éthylène et d'esters acryliques, caractérisé en ce que ladite pellicule comprend en poids par rapport au mélange total:
a) 40 à 75 % de polystyrène
b) 25 à 60 % de copolymère d'éthylène et d'esters acryliques
c) 0 à 3% de copolymère séquencé styrène/butadiène/styrène.

Il a en effet été trouvé de façon tout à fait surprenante et contrairement à l'enseignement de l'art antérieur, notamment les documents JP-A-6200939 et JP-A- 62 11747 analysés ci-dessus, qu'un film ne comportant sensiblement pas de copolymère séquencé ("block") styrène/butadiène/styrène présentait des qualités supérieures et/ou différentes aux films qui comprennent ce type de composant. Le terme "sensiblement pas" signifie que le mélange ne devra pas comporter plus de 3 % en poids par rapport au poids total du mélange dudit copolymère.

Les polystyrènes convenant pour la présente invention sont bien connus de l'homme de métier et sont notamment ceux qui présentent des facilités de mise en oeuvre (coextrusion, lamination), de bonnes propriétés mécaniques et une aptitude au recyclage. Ils présentent généralement un poids moléculaire compris entre 100 000 et 350 000 en particulier entre 150 000 et 250 000.

De préférence, le polystyrène utilisé est un polystyrène "choc", c'est-à-dire un polystyrène qui a été renforcé par l'ajout d'une faible quantité (en général moins de 10 %) de polybutadiène. Ce polystyrène "choc" aura notamment un indice de fluidité sous 5 kg à 200°C compris entre 3 et 10.

Les copolymères éthylène ester acrylique sont également bien connus dans l'art et sont formés par combinaison aléatoire dans des proportions variables des monomères correspondants. Ils présentent un bas point de fusion (entre 50°C et 100°C) et un fort pouvoir adhésif.

De préférence, les copolymères (b) comprennent en poids 60 à 95 % d'éthylène et 5 à 40 % de dérivés acryliques.

Il a été trouvé qu'il était avantageux d'utiliser un mélange de deux de ces copolymères, l'un ayant un point de fusion plus élevé que l'autre. Ce mélange offre l'intérêt d'une plus large gamme de température de scellage et crée la pelabilité. "

Avantageusement, l'un de ces copolymères aura un point de fusion compris entre 60 et 80 °C et comprendra en poids entre 60 et 80 % d'éthylène et 20 à 40 % d'esters acryliques. Le second copolymère aura un point de fusion compris entre 80 et 100°C, et comprendra en poids 75 à 95 % d'éthylène et 5 à 25 % d'esters acryliques. Généralement, l'indice de fluidité de ces copolymères sous 2,16 kg à 190° est compris entre 5 et 10 pour le premier polymère et entre 0,5 et 5 pour le second. De préférence, le rapport en poids entre le second copolymère et le premier copolymère sera compris entre 0,5 et 2.

Les esters acryliques sont de préférence choisis parmi les acrylates ou méthacrylates d'alkyle, notamment de (C₁-C₄) alkyle.

Avantageusement le ester acrylique est le méthacrylate de méthyle.

Selon de l'invention le film thermoscellable est caractérisé en ce que la pellicule comprend en poids par rapport au mélange total :
a) 40 à 75 % de polystyrène,
b) 25 à 60 % de copolymère d'éthylène et de dérivés acryliques,
c) éventuellement jusqu'à 3 % de copolymère séquencé styrène/butadiène/styrène.

Selon une autre variante encore préférée par rapport à la précédente, le film thermoscellable est caractérisé en ce que ladite pellicule comprend en poids par rapport au mélange total :
a) 40 % à 70 % de polystyrène,
b) 30 à 60 % de copolymère d'éthylène et de dérivés acryliques.

Afin d'assurer une certaine rigidité au film thermoscellable, il a été trouvé qu'il était avantageux de juxtaposer à celui-ci, à titre de couche externe, une couche supplémentaire ne fondant pas aux températures de scellage, essentiellement rigide, comme par exemple un copolymère polyéthylène térephtalate. L'adhésion de la couche interne à la couche externe peut être améliorée par l'interposition d'un promoteur d'adhésion.

Selon une autre variante, le film scellable et pelable multicouche comprend une couche intermédiaire de polystyrène. L'adhésion de cette couche intermédiaire d'une part à la couche externe et d'autre part au film thermoscellable décrit précédemment, étant assurée de la même manière par un promoteur d'adhésion.

Ces films sont normalement obtenus par extrusion ou co-extrusion ou lamination dans le cas des films multicouches.

L'invention concerne également un procédé pour sceller un récipient en polystyrène au moyen d'un film thermoscellable et qui est pelable par la suite, ledit procédé étant caractérisé en ce que l'on obture le récipient de façon étanche avec un film tel que défini précédemment, et en ce que sur le bord du récipient est appliqué un moyen de chauffage à une température suffisante pour faire fondre la couche telle que définie précédemment et à une pression comprise entre 0,1 et 1 MPa (soit 1 et 10 bars) de façon à faire une soudure essentiellement continue sur la totalité du bord.

Comme cela sera illustré par les exemples de réalisation, ce procédé permet par la suite le pelage dudit film avec une force de pelage comprise entre 200 et 600 g/cm et de préférence, supérieure à 300 g/cm.

La température de scellage sera avantageusement comprise entre 100°C et 200°C, de préférence comprise entre 120 et 160°C.

Il s'agit donc d'un avantage important de la présente invention de permettre un thermoscellage à des températures généralement inférieures à celles pratiquées habituellement.

L'invention a également pour objet un récipient en polystyrène thermoscellé par un film tel qu'il a été décrit précédemment et notamment obtenu par le procédé décrit ci-dessus.

Elle a également pour objet l'utilisation d'une composition pour la réalisation d'un film thermoscellable et pelable pour récipients en polystyrène.

L'invention est maintenant illustrée par des exemples particuliers :

Des films dont les différentes formulations sont indiquées ci-dessous sont extrudés.

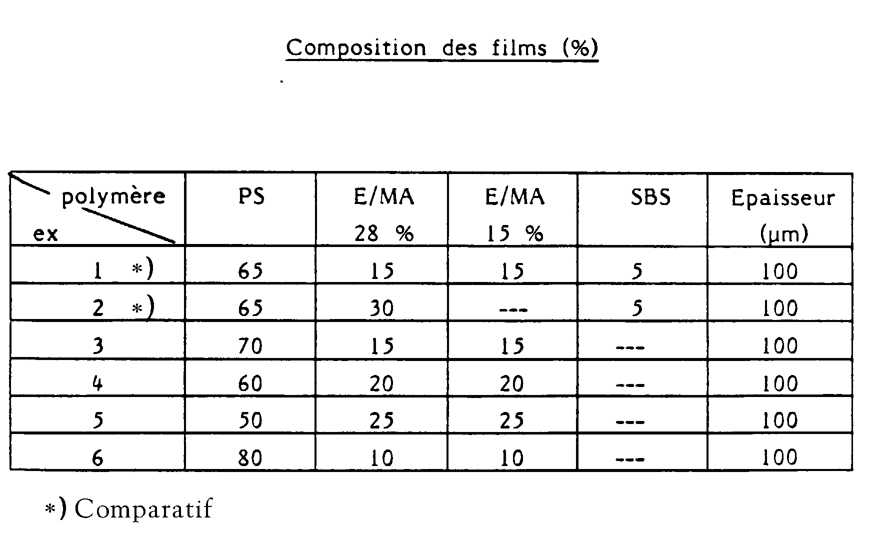

PS signifie polystyrène d'un P.M. d'environ 180 000
E/MA 28 % signifie copolymère éthylène-acrylate de méthyle avec 28 % d'acrylate de méthyle
E/MA 15 % signifie copolymère éthylène-acrylate de méthyle avec 15 % d'acrylate de méthyle
SBS signifie styrène-butadiène.

Ces films sont scellés dans les conditions suivantes :
- température des mors : de 147°C à 185°C
- pression aux mors : 0,4 MPa
- durée du scellage : 1 seconde

Le pelage est effectué à une vitesse de 100 mm/min. La force de pelage est mesurée de manière connue en g/cm.

Les résultats sont indiqués ci-dessous pour différentes températures de scellage :

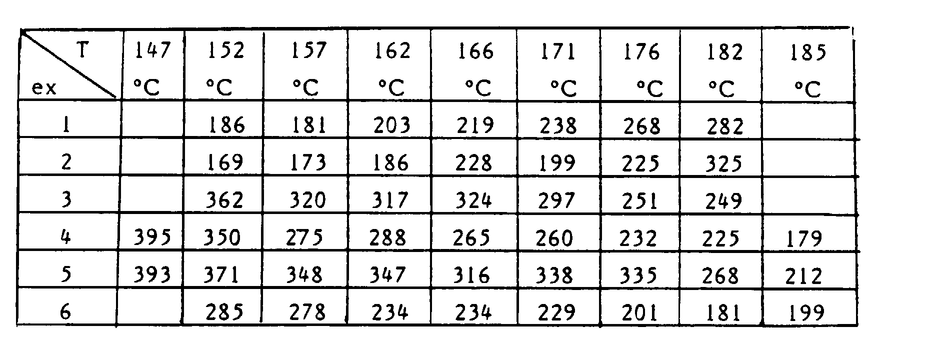

Des films multicouches sont réalisés par lamination avec les films monocouches des exemples 3 et 5.

ex. 7 : PET (12 µm)/PS(80 µm) / ex. 3 (20 µm)

ex. 8 : PET (12 µm)/PS(80 µm) / ex. 5 (20 µm).

Les conditions de scellage et de pelage sont identiques aux précédentes et conduisent à des forces de pelage très satisfaisantes.

## Revendications

1. Film thermoscellable et pelable pour récipients en polystyrène, constitué d'au moins une pellicule comprenant un mélange (a) de polystyrène, (b) d'un ou de copolymère(s) d'éthylène et d'esters acryliques, caractérisé en ce que ladite pellicule comprend en poids par rapport au mélange total :
a) 40 à 75 % de polystyrène,
b) 25 à 60 % de copolymère d'éthylène et d'esters acryliques,
c) 0 à 3 % de copolymère séquencé styrène/butadiène/styrène

2. Film selon la revendication 1, caractérisé en ce que ladite pellicule comprend en pourcentage en poids par rapport au mélange total :
a) 40 à 70 %, de polystyrène,
b) 30 à 60 % de copolymère d'éthylène et d'esters acrylique.

3. Film selon la revendication 1, caractérisé en ce que le polystyrène (a) comprend jusqu'à 10 % en poids de polybutadiène.

4. Film selon l'une des revendications 1 à 3, caractérisé en ce que le ou les copolymères (b) comprennent en poids 60 à 95 % d'éthylène et 5 à 40 % de d'esters acryliques.

5. Film selon l'une des revendications 1 à 4, caractérisé en ce que les copolymères (b) comprennent deux copolymères de point de fusion différent.

6. Film selon la revendication 5, caractérisé en ce que les copolymères (b) comprennent en poids un copolymère constitué de 60 à 80 % d'éthylène et 20 à 40 % d'esters acryliques et un autre copolymère constitué de 75 à 95 % d'éthylène et 5 à 25 % d'esters acryliques.

7. Film selon l'une des revendications 1, 2, 4 à 6, caractérisé en ce que les esters acryliques sont choisis parmi les acrylates ou méthacrylates d'alkyle notamment (C₁-C₄) alkyle.

8. Film selon la revendication 7, caractérisé en ce que l'ester acrylique est le méthacrylate de méthyle.

9. Film scellable et pelable multicouche comprenant une couche interne selon l'une des revendications 1 à 8, une couche ne fondant pas aux températures de scellage, essentiellement rigide, et une intercouche d'un promoteur d'adhésion.

10. Film selon la revendication 9, caractérisé en ce que la couche essentiellement rigide est du polyéthylène téréphtalate.

11. Film selon la revendication 9 ou 10, caractérisé en ce qu'il comprend une couche intermédiaire de polystyrène.

12. Film selon l'une des revendications précédentes, caractérisé un ce qu'il est obtenu par extrusion ou co-extrusion.

13. Procédé pour sceller un récipient en polystyrène au moyen d'un film qui est pelable par la suite, caractérisé en ce que l'on obture le récipient de façon étanche avec un film selon l'une des revendications précédentes, et en ce que sur le bord dudit récipient est appliqué un moyen de chauffage à une température suffisante pour faire fondre la couche selon l'une des revendications 1 à 8, et à une pression comprise entre 0,1 et 1 MPa (soit 1 et 10 bars) de façon à faire une soudure essentiellement continue sur la totalité du bord.

14. Procédé selon la revendication 13, caractérisé en ce que la température est comprise entre 100°C et 200°C.

15. Procédé selon la revendication 14, caractérisé en ce que la température est comprise entre 120 et 160°C.

16. Récipient en polystyrène thermoscellé par un film selon l'une des revendications 1 à 12.

17. Récipient en polystyrène thermoscellé par un film selon la revendication 16, caractérisé en ce qu'il est obtenu par un procédé selon l'une des revendications 13 à 15.

18. Utilisation d'une compositioin telle que définie aux revendications 1 à 8, pour la réalisation d'un film thermoscellable et pelable pour récipients en polystyrène.

## Patentansprüche

1. Heißversiegelbarer und abziehbarer Film für Behältnisse aus Polystyrol, bestehend aus mindestens einem Film, enthaltend eine Mischung (a) aus Polystyrol, (b) aus einem oder mehreren Copolymeren aus Ethylen und Acrylestern, dadurch gekennzeichnet, daß der Film, ausgedrückt in Gewichtsprozent und bezogen auf die Gesamtmischung, enthält:
a) 40 bis 75 % Polystyrol,
b) 25 bis 60 % eines Copolymers aus Ethylen und Acrylestern,
c) 0 bis 3 % eines Styrol/Butadien/Styrol-Blockcopolymeren.

2. Film nach Anspruch 1, dadurch gekennzeichnet, daß der Film, ausgedrückt in Gewichtsprozent und bezogen auf die Gesamtmischung, enthält:
a) 40 bis 70 % Polystyrol,
b) 30 bis 60 % eines Copolymeren aus Ethylen und Acrylestern.

3. Film nach Anspruch 1, dadurch gekennzeichnet, daß das Polystyrol (a) bis zu 10 Gew.-% Polybutadien enthält.

4. Film nach einem der Ansprüche 1 bis 3, dadurch gekennzeichnet, daß das oder die Copolymeren (b), ausgedrückt in Gewichtsprozent, 60 bis 95 % Ethylen und 5 bis 40 % Acrylester enthalten.

5. Film nach einem der Ansprüche 1 bis 4, dadurch gekennzeichnet, daß die Copolymeren (b) zwei Copolymere mit unterschiedlichem Schmelzpunkt enthalten.

6. Film nach Anspruch 5, dadurch gekennzeichnet, daß die Copolymere (b), ausgedrückt in Gewichtsprozent, ein Copolymer aus 60 bis 80 % Ethylen und 20 bis 40 % Acrylestern und ein weiteres Copolymer aus 75 bis 95 % Ethylen und 5 bis 25 % Acrylestern enthalten.

7. Film nach einem der Ansprüche 1, 2 und 4 bis 6, dadurch gekennzeichnet, daß die Acrylester aus Alkylacrylaten oder -methacrylaten, insbesondere solche mit C₁- bis C₄-Alkyl, ausgewählt sind.

8. Film nach Anspruch 7, dadurch gekennzeichnet, daß der Acrylester Methylmethacrylat ist.

9. Versiegelbarer und abziehbarer mehrschichtiger Film, enthaltend eine innere Schicht nach einem der Ansprüche 1 bis 8, eine bei den Versiegelungstemperaturen nicht schmelzende, insbesondere unelastische Schicht und eine adhäsionsverstärkende Zwischenschicht.

10. Film nach Anspruch 9, dadurch gekennzeichnet, daß die im wesentlichen unelastische Schicht eine Polyethylenterephthalatschicht ist.

11. Film nach Anspruch 9 oder 10, dadurch gekennzeichnet, daß er eine Zwischenschicht aus Polystyrol enthält.

12. Film nach einem der vorhergehenden Ansprüche, dadurch gekennzeichnet, daß er durch Extrusion oder Coextrusion erhalten ist.

13. Verfahren zur Versiegelung eines Behältnisses aus Polystyrol mittels eines Films, der anschließend abziehbar ist, dadurch gekennzeichnet, daß man das Behältnis mit einem Film nach einem der vorhergehenden Ansprüche dicht einpackt und man auf den Rand dieses Behältnisses eine Heizvorrichtung einwirken läßt bei einer Temperatur, die ausreicht, um die Schicht nach einem der Ansprüche 1 bis 8 zum Schmelzen zu bringen, und bei einem Druck zwischen 0,1 und 1 MPa (d.h. 1 bis 10 bar), um eine im wesentlichen durchgängige Schweißnaht über den gesamten Randbereich zu erhalten.

14. Verfahren nach Anspruch 13, dadurch gekennzeichnet, daß die Temperatur zwischen 100 °C und 200 °C beträgt.

15. Verfahren nach Anspruch 14, dadurch gekennzeichnet, daß die Temperatur zwischen 120 und 160 °C beträgt.

16. Behälter aus Polystyrol, heißversiegelt mit einem Film nach einem der Ansprüche 1 bis 12.

17. Behälter aus Polystyrol, heißversiegelt mit einem Film nach Anspruch 16, dadurch gekennzeichnet, daß es durch ein Verfahren nach einem der Ansprüche 13 bis 15 erhalten ist.

18. Verwendung einer Zusammensetzung gemäß den Ansprüchen bis 8 zur Herstellung eines heißversiegelbaren und abziehbaren Films für Behältnisse aus Polystyrol.

## Claims

1. Heat-sealable and peelable film for polystyrene containers, consisting of at least one thin film comprising a mixture (a) of polystyrene and (b) of one or more copolymer(s) of ethylene and of acrylic esters, characterized in that the said thin film comprises, by weight relative to the total mixture:
a) 40 to 75 % of polystyrene,
b) 25 to 60 % of copolymer of ethylene and of acrylic esters,
c) 0 to 3 % of styrene/butadiene/styrene block copolymer.

2. Film according to Claim 1, characterized in that the said thin film comprises, in per cent by weight relative to the total mixture:
a) 40 to 70 % of polystyrene,
b) 25 to 60 % of copolymer of ethylene and of acrylic esters.

3. Film according to Claim 1, characterized in that the polystyrene (a) comprises up to 10 % by weight of polybutadiene.

4. Film according to one of Claims 1 to 3, characterized in that the copolymer or copolymers (b) comprise 60 to 95 % by weight of ethylene and 5 to 40 % of acrylic esters.

5. Film according to one of Claims 1 to 4, characterized in that the copolymers (b) comprise two copolymers of different melting points.

6. Film according to Claim 5, characterized in that the copolymers (b) comprise, on a weight basis, a copolymer consisting of 60 to 80 % of ethylene and 20 to 40 % of acrylic esters and another copolymer consisting of 75 to 95 % of ethylene and 5 to 25 % of acrylic esters.

7. Film according to one of Claims 1, 2, 4 to 6, characterized in that the acrylic esters are chosen from alkyl, especially C₁-C₄ alkyl, acrylates or methacrylates.

8. Film according to Claim 7, the acrylic ester is methyl methacrylate.

9. Sealable and peelable multilayer film comprising an internal layer according to one of Claims 1 to 8, a layer which does not melt at the sealing temperatures, and which is essentially rigid, and an interlayer of an adhesion promoter.

10. Film according to Claim 9, characterized in that the essentially rigid layer is polyethylene terephthalate.

11. Film according to Claim 9 or 10, characterized in that it comprises an intermediate polystyrene layer.

12. Film according to one of the preceding claims, characterized in that it is obtained by extrusion or coextrusion.

13. Process for sealing a polystyrene container by means of a film which is subsequently peelable, characterized in that the container is closed in a leakproof manner with a film according to one of the preceding claims, and in that a means for heating to a sufficient temperature to melt the layer according to one of Claims 1 to 8 and at a pressure of between 0.1 and 1 MPa (that is 1 and 10 bars) is applied to the edge of the said container so as to make an essentially continuous weld over the whole of the edge.

14. Process according to Claim 13, characterized in that the temperature is between 100 C and 200 C.

15. Process according to Claim 14, characterized in that the temperature is between 120 and 160 C.

16. Polystyrene container heat-sealed by a film according to one of Claims 1 to 12.

17. Polystyrene container heat-sealed by a film according to Claim 16, characterized in that it is obtained by a process according to one of claims 13 to 15.

18. Use of a composition as defined in Claims 1 to 8 for the production of a heat-sealable and peelable film for polystyrene containers.
